# EUROPÄISCHE PATENTSCHRIFT

(11) **EP 1 234 217 B1**
(45) Veröffentlichungstag und Bekanntmachung des Hinweises auf die Patenterteilung: **22.12.2004**
(21) Anmeldenummer: 00983196.7
(22) Anmeldetag: 30.11.2000
(51) Int. Cl.: G03G 15/02

(54) **KOROTRON MIT AUF AUFLAGERN AUFLIEGENDEM HALTEELEMENT**
COROTRON COMPRISING A FIXING ELEMENT ON SUPPORTS
COROTRON MUNI D'UN ELEMENT DE FIXATION SUR DES SUPPORTS

(30) Priorität: 30.11.1999 DE 19957615
(43) Veröffentlichungstag der Anmeldung: 28.08.2002
(60) Teilanmeldung: 04011668.3
(73) Patentinhaber: OCE Printing Systems GmbH, 85586 Poing (DE)
(72) Erfinder: RUMPEL, Peter, 83620 Feldkirchen/w. (DE); GACK, Hartmut, 81547 München (DE)
(74) Vertreter: Schaumburg, Thoenes, Thurn, Landskron Patentanwälte
(86) Internationale Anmeldenummer: PCT/EP2000/012045
(87) Internationale Veröffentlichungsnummer: WO 2001/040880

(56) Entgegenhaltungen:
- US-A- 3 685 895
- US-A- 5 128 720
- US-A- 5 335 050
- US-A- 5 449 906
- PATENT ABSTRACTS OF JAPAN vol. 013, no. 460 (P-946), 18. Oktober 1989 (1989-10-18) & JP 01 179960 A (KONICA CORP), 18. Juli 1989 (1989-07-18)
- PATENT ABSTRACTS OF JAPAN vol. 1996, no. 10, 31. Oktober 1996 (1996-10-31) & JP 08 146715 A (CANON INC), 7. Juni 1996 (1996-06-07)
- PATENT ABSTRACTS OF JAPAN vol. 017, no. 498 (P-1609), 8. September 1993 (1993-09-08) & JP 05 127489 A (RICOH CO LTD), 25. Mai 1993 (1993-05-25)
- PATENT ABSTRACTS OF JAPAN vol. 006, no. 092 (P-119), 29. Mai 1982 (1982-05-29) & JP 57 029058 A (FUJI XEROX CO LTD), 16. Februar 1982 (1982-02-16)
- PATENT ABSTRACTS OF JAPAN vol. 009, no. 090 (P-350), 19. April 1985 (1985-04-19) & JP 59 218467 A (FUJI XEROX KK), 8. Dezember 1984 (1984-12-08)
- PATENT ABSTRACTS OF JAPAN vol. 1997, no. 07, 31. Juli 1997 (1997-07-31) & JP 09 068848 A (RICOH CO LTD), 11. März 1997 (1997-03-11)
- PATENT ABSTRACTS OF JAPAN vol. 008, no. 042 (P-256), 23. Februar 1984 (1984-02-23) & JP 58 193560 A (FUJI XEROX KK), 11. November 1983 (1983-11-11)

## Beschreibung

Die Erfindung betrifft ein Korotroh für elektrographische Prozesse, insbesondere in einem Drucker oder Kopierer. Ein solches Korotron dient zum elektrischen Aufladen eines Trägermaterials für ein latentes Bild, insbesondere eines Fotoleiterbandes.

Die erhöhten Anforderungen an die technische Leistungsfähigkeit der Druck- und Kopierverfahren machen es notwendig, die einzelnen Elemente der Druck- und Kopiereinrichtung präzise zu justieren. Um z.B. das elektrische Aufladen von Trägermaterial durch ein Ladekorotron 'effektiv zu gestalten, soll der Abstand zwischen dem Korotrondraht und dem Trägermaterial klein sein. Geringe Abweichungen in der Parallelität der Ebene des Trägermaterials und der Längsachse des Korotrondrahtes bewirken ein ungleichmäßiges Aufladen des Trägermaterials, welches zu einer ungleichmäßigen Ausbildung des Druckbildes führt. Beeinflussende Faktoren für die gleichmäßige Aufladung des Trägermaterials sind unter anderem die Abweichung von der Parallelität und der Gesamtabstand zwischen Korotrondraht und Trägermaterial. Beim Verringern des Abstandes zwischen Korotrondraht und Trägermaterial wirkt sich die Abweichung in zunehmendem Maße ungünstig auf die Qualität des Druckbildes aus.

Aus den Patentschriften US-A-5,449,906 und US-A-4,258,258 sind Anordnungen bekannt, die eine Korotrondrahteinheit für eine elektrographische Druck- oder Kopiereinrichtung enthalten. Der Korotrondraht ist mit Endstücken versehen, wobei der Korotrondraht in einem Einschub angeordnet ist, der ein Reflektorelement und eine elektrische Anschlußklemme enthält. Durch diese Anordnung besteht die Möglichkeit den Korotrondraht zusammen mit dem Einschub leicht auszutauschen. Bei geringem Abstand zwischen Korotrondraht und Trägermaterial ist es jedoch unbedingt erforderlich, daß der Korotrondraht zusammen mit dem Einschub gegenüber dem Trägermaterial nach dem Austausch neu ausgerichtet wird, um die parallele Ausrichtung der Längsachse des Korotrondrahtes zu der Ebene des Trägermaterials exakt einzustellen. Für diese Tätigkeit ist qualifiziertes Servicepersonal erforderlich.

Aus der Patentschrift US-A-5,449,906 ist eine Anordnung bekannt, mit der es möglich ist, Korotrondrähte in eine Korotronanordnung einzusetzen. Der Korotrondraht wird an einem Halteelement mit federnden Klammern befestigt. Zusammen mit dem Halteelement werden die Korotrondrähte in die Korotronanordnung eingesetzt, in der ebenfalls federnde Klammern angeordnet sind. Beim Einsetzen ist der Korotrondraht von den Klammern des Halteelements und von den Klammern der Korotronanordnung teilweise umschlossen. Die Klammern. der Korotronanordnung üben eine größere Kraft auf den Korotrondraht aus als die Klammern des Halteelements, so daß sich beim Entfernen des Halteelements aus der Korotronanordnung die Klammern des Halteelements vom Korotrondraht lösen. Der Korotrondraht verbleibt in der Korotronanordnung und der Einsetzvorgang ist beendet. Ein Entfernen, des Korotrondrahtes aus der Korotronanordnung ist mit diesem Halteelement nicht möglich. Das Entfernen des Korotrondrahtes ist nur durch mechanische Einwirkung auf den Korotrondraht und/oder auf dessen Befestigungselemente möglich. Bei diesem Vorgehen kann der Korotrondraht zerbrechen. Gerade bei glasummantelten Korotrondrähten stellt dies ein erhebliches Verletzungsrisiko für die ausführende Person dar.

Die US-A 3 685 895 beschreibt ein Gestell zum elektrostatischen Aufladen eines Trägermaterials, bei dem Korotrondrähte in Blöcken gelagert sind. Die Blöcke sind innerhalb eines über das Trägermaterial bewegbaren Arms angeordnet. Der Arm wird entlang der rechten und linken Kante des Gestells über das Trägermaterial entlanggeführt. Auf den bewegbaren Arm ist eine Spannungsversorgungseinheit zum Versorgen der Korotrondrähte vorgesehen.

Aus der englischen Zusammenfassung der JP-A-01-179 960 ist ein Rahmen zum Halten eines Korotrondrahtes bekannt, der vertikal in ein Bilderzeugungsgerät einsetzbar ist. Das Zuführen der Versorgungsspannung des Korotrondrahts von einer Stromversorgungseinheit zum Rahmen erfolgt mit Hilfe von Steckverbindern.

Aufgabe der Erfindung ist es, einen einfachen Aufbau für ein Korotron anzugeben, bei dem ein Korotrondraht mit hoher Genauigkeit parallel zum Trägermaterial verläuft.

Diese Aufgabe wird durch ein Korotron mit den Merkmalen des Patentanspruchs 1 gelöst. Bei diesem Korotron steht mindestens ein von einem Halteelement gehaltener Korotrondraht einem Trägermaterial für ein latentes Bild gegenüber, wobei das Trägermaterial von einem Führungselement geführt wird, Trägermaterial und Korotrondraht in im wesentlichen parallel zueinander angeordneten Flächen liegen und wobei das Halteelement an mindestens zwei Auflagestellen auf Auflagern aufliegt, die mit dem Führungselement fest verbunden sind. Dadurch wird erreicht, daß das Halteelement und somit auch der Korotrondraht in einem konstanten Abstand zum Trägermaterial angeordnet sind. Nach erfolgter Montage des Druckers oder Kopierers dient das Führungselement dem Halteelement als Auflager. Dieses Halteelement sitzt auf dem Führungselement auf und ist somit gegenüber dem Trägermaterial stets korrekt ausgerichtet. Ein Nachjustieren ist nicht erforderlich.

In einer Ausgestaltungsform der Erfindung ist das Halteelement von Führungselementen geführt, wobei die Führungselemente und das Halteelement ein Spiel in Richtung Trägermaterial haben. Das Halteelement liegt auf Auflagestellen auf, die beiderseits des Trägermaterials angeordnet sind. Dadurch wird erreicht, daß das Halteelement durch diese Führungselemente im Drucker oder Kopierer angeordnet ist, jedoch in Richtung Trägermaterial genügend Bewegungsspielraum hat, so daß es auf Auflagern beiderseits des Trägermaterials aufsitzt und somit parallel zum Trägermaterial ausgerichtet ist.

In einer vorteilhaften Ausgestaltungsform der Erfindung ist das Halteelement mit einer Feder auf das Auflager gedrückt und durch die Federkraft in einer parallelen Ebene zum Trägermaterial fixiert. Über die Feder ist weiterhin eine elektrische Verbindung mit einer Spannungsversorgungseinheit oder mit der Masse des Druckers oder des Kopierers hergestellt. Dadurch wird erreicht, daß das Halteelement auch bei mechanisehen Einflüssen sicher auf dem Auflager fixiert ist, und daß eine kurze und kostengünstige elektrische Verbindung zu dem Halteelement hergestellt ist.

In einer weiteren vorteilhaften Ausgestaltungsform der Erfindung ist das Halteelement durch Führungselemente in einem Träger geführt, wobei der Träger in einer schwenkbaren Anordnung angeordnet ist. Durch die schwenkbare Anordnung wird erreicht, daß der Drucker oder Kopierer wartungsfreundlich aufgebaut ist, daß Elemente des Druckers oder Kopierers in eine Wartungsposition schwenkbar und/oder abhebbar sind, und daß das Halteelement beim Zurückschwenken in die Arbeitsposition gegenüber dem Trägermaterial wieder exakt ausgerichtet ist.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert. Es zeigen:
- Figur 1: einen Schwenkträger mit zwei Korotronanordnungen, wobei in einer Korotronanordnung ein Korotrondrahteinschub installiert ist,
- Figur 2: ein Ausschnitt des in Figur 1 dargestellten Schwenkträgers mit der Korotronanordnung ohne Korotrondrahteinschub,
- Figur 3: einen Schnitt durch die Korotronanordnung, einen Träger, die Spannungsversorgungseinheit und das Fotoleiterband,
- Figur 4: den Korotrondrahteinschub mit Bruchlinien als Teilansicht,
- Figur 5: das Verteilelement im Vollschnitt,
- Figur 6: das Verteilelement des Korotrondrahteinschubs aus Figur 4 und 5 in einer um 90° gedrehten Ansicht,
- Figur 7: das Aluminiumstrangprofil des Korotrondrahteinschubs mit dem Bandauflageelement als Auflager in einer Teilansicht,
- Figur 8: die Teilansicht des Aluminiumstrangprofils aus Figur 7 in einer um 90° gedrehten Ansicht dieser Anordnung,
- Figur 9: den Korotrondraht in dem Halteelement in einer teilgeschnittenen Darstellung sowie eine um 90° gedrehte Ansicht dieser Anordnung,
- Figur 10: den Korotrondraht mit den Endstücken aus Figur 9 in einer ungeschnittenen Darstellung mit dem geschnitten dargestellten, vom Korotrondraht getrennten Halteelement sowie eine um 90° gedrehte Ansicht dieser Anordnung,
- Figur 11: den Korotrondrahteinschub und den Korotrondraht in dem Halteelement,
- Figur 12: den Korotrondrahteinschub mit dem eingesetzten Korotrondraht sowie das Halteelement aus Figur 11,
- Figur 13: eine perspektivische Teilansicht der Korotronanordnung in Betriebslage,
- Figur 14: eine perspektivische Teilansicht der Korotronanordnung in Wartungsposition,
- Figur 15: eine Teilansicht der Korotronanordnung in Betriebslage, und
- Figur 16: eine Teilansicht der Korotronanordnung in Wartungsposition.

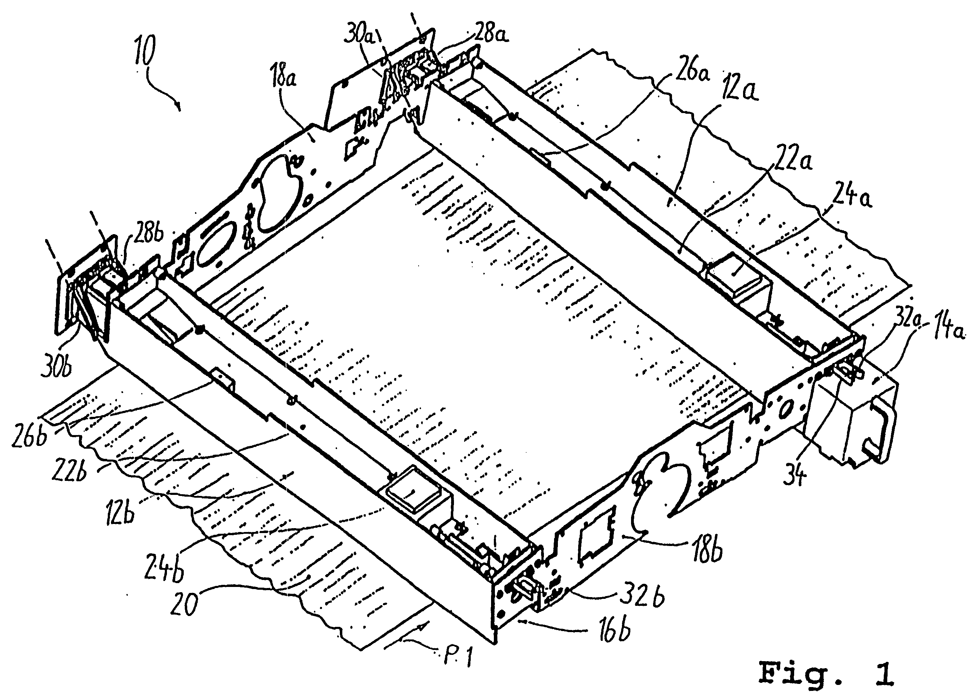

In Figur 1 ist ein Schwenkträger 10 mit zwei Korotronanordnungen 12a, 12b dargestellt, wobei in der Korotronanordnung 12a ein Korotrondrahteinschub 14a installiert ist. Ebenso kann in der Korotronanordnung 12b ein gleichartiger Korotrondrahteinschub 14b (nicht dargestellt) angeordnet werden. Die Korotronanordnungen 12a und 12b einschließlich der Korotrondrahteinschübe 14a, 14b sind identisch aufgebaut. Elemente, die für einen Korotrondrahteinschub 14a, 14b oder eine Korotronanordnung 12a, 12b beschrieben und/oder in den Figuren dargestellt sind gelten jeweils für beide Anordnungen.

An der Korotronanordnung 12b ist ein Einschubplatz 16b für einen Korotrondrahteinschub 14b vorgesehen. Die Korotronanordnungen 12a, 12b sind über Schwenkträgerplatinen 18a, 18b miteinander verbunden, die auch dafür vorgesehen sind, andere Elemente, wie z.B. Zeichengeneratoren, Reinigungseinheiten oder weitere Korotronanordnungen aufzunehmen. Das Trägermaterial, in diesem Ausführungsbeispiel ein Fotoleiterband 20, für ein latentes Bild wird aus dieser Perspektive unter dem Schwenkträger 10 in Richtung des Pfeils Pl vorbeigeführt. Der Schwenkträger 10 kann in einer beliebigen Lage im Drucker oder Kopierer angeordnet sein.

In den Korotronanordnungen 12a, 12b sind oberhalb der Korotrondrahteinschübe 14a, 14b die Spannungsversorgungseinheiten 22a, 22b angeordnet, die jeweils ein erstes Netzteil 24a, 24b zum Erzeugen der Korotrondrahtspannung und jeweils ein zweites Netzteil 26a, 26b zum Erzeugen einer an den Reflektor anzulegenden Reflektorspannung enthalten. An einem Ende jeder Korotronanordnung 12a, 12b sind Verbindungselemente 28a, 28b angeordnet, durch die das in den Korotronanordnungen 12a, 12b entstehende Ozon über Kanäle einer Ozonvernichtungseinheit zugeführt wird. Die Verbindungselemente 28a, 28b sind fest mit den Korotronanordnungen 12a, 12b verbunden. Zwei weitere Verbindungselemente 30a, 30b sind mit dem Gestell des Drukkers oder Kopierers fest verbunden. Die Verbindungselemente 28a, 28b, 30a, 30b weisen an ihren Berührungsflächen Schrägen mit einem Winkel von 45° auf, wodurch eine einfache Anpassung des Kanalübergangs der Verbindungselemente 28a, 28b, 30a, 30b an die Position des Schwenkträgers 10 bzw. an die Position der Korotronanordnungen 12a, 12b möglich ist.

An den Korotronanordnungen 12a, 12b sind Halteklammern 32a, 32b vorgesehen, die jeweils einen Arretierungszapfen 34 umschließen, der an dem Korotrondrahteinschub 14a, 14b fest angeordnet ist. Mithilfe der Halteklammern 32a, 32b wird ein Herausziehen der jeweiligen Korotrondrahteinheit 14a, 14b erschwert, wodurch eine ausreichende Befestigung der jeweiligen Korotrondrahteinheit 14a, 14b in der betreffenden Korotronanordnung 12a, 12b gewährleistet.

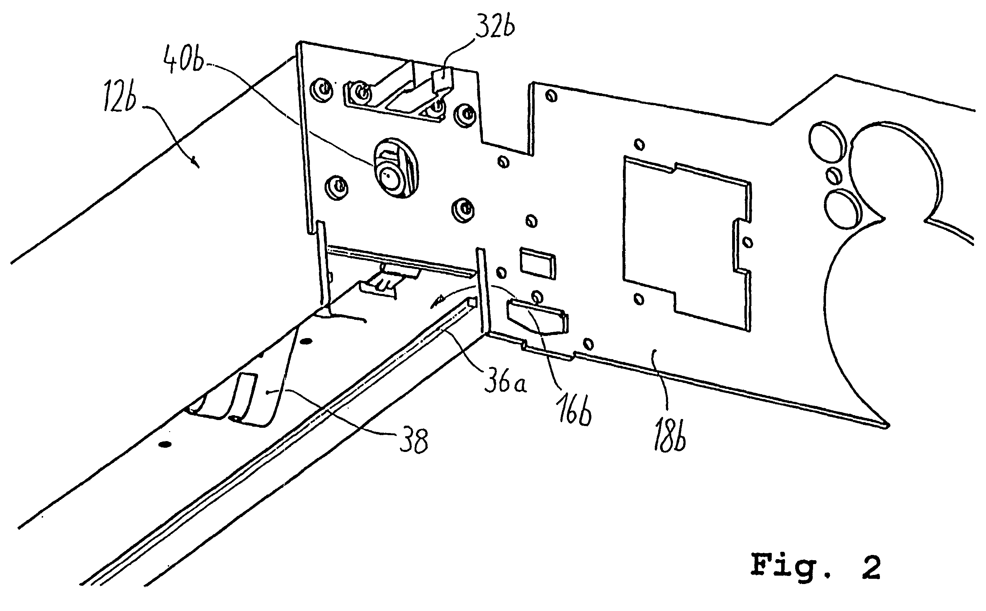

In Figur 2 ist ein Ausschnitt des in Figur 1 dargestellten Schwenkträgers 10 mit der Korotronanordnung 12b ohne Korotrondrahteinschub 14b dargestellt. Gleiche Elemente haben gleiche Bezugszeichen. Wie in Figur 1 beschrieben ist die Korotronanordnung 12b mit der Schwenkträgerplatine 18b verbunden. In dem Einschubplatz 16b für den Korotrondrahteinschub 14b sind zwei einander gegenüberliegende Führungsschienen 36a und 36b angeordnet. In dieser Figur ist nur eine Führungsschiene 36a sichtbar. In der Korotronanordnung 12b sind ferner mehrere Blattfedern 38 angeordnet, die eine Kraft in Richtung des Fotoleiterbandes 20 auf den Korotrondrahteinschub 14b im eingebauten Zustand ausüben. Dabei stellen sie zu den Reflektoren (die weiter unten noch beschrieben werden) des Korotrondrahteinschubs 14b auch elektrisch leitende Verbindungen her. An der gezeigten Korotronanordnung 12b ist ferner eine vertikal bewegliche Buchse 40b vorgesehen, über die die Spannung für die Korotrondrähte zugeführt wird.

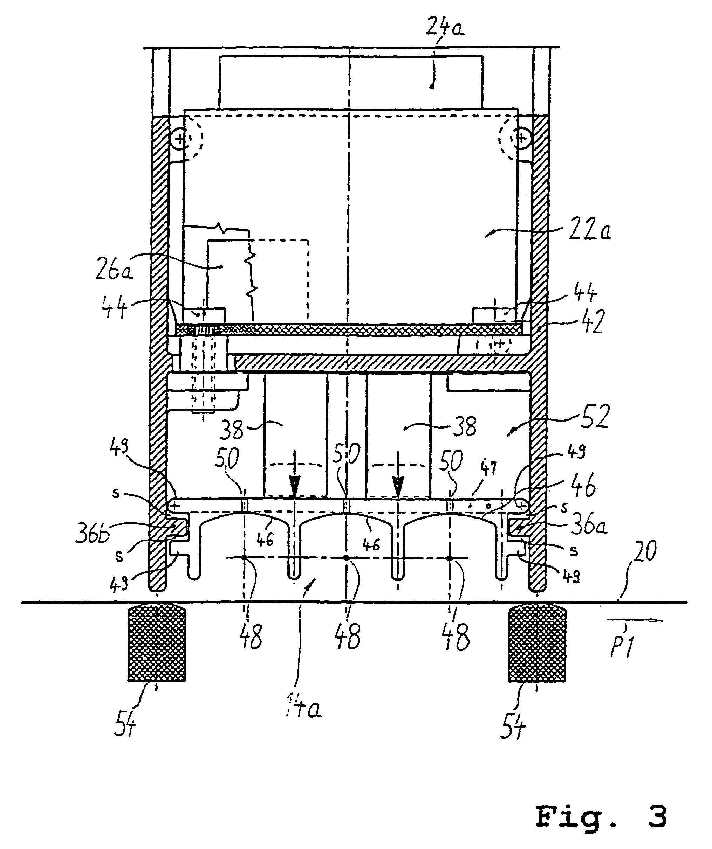

In Figur 3 ist ein Schnitt durch die Korotronanordnung 12a, einen Träger 42, die Spannungsversorgungseinheit 22a und das Fotoleiterband 20 dargestellt. Der Träger 42 hat einen H-förmigen Querschnitt in dessen oberer rechteckiger Aussparung die Spannungsversorgungseinheit 22a mit dem ersten Netzteil 24a und dem zweiten Netzteil 26a angeordnet ist. Die Spannungsversorgungseinheit 22a ist mittels Schrauben-44 am Träger 42 befestigt. Der Korotrondrahteinschub 14a wird von den zwei einander gegenüberliegenden Führungsschienen 36a, 36b, die in der unteren rechteckigen Aussparung des H-förmigen Trägerquerschnitts 42 angeordnet sind, im Träger 42 aufgenommen. Die Führungsschienen 36a, 36b sind fest mit dem Träger 42 verbunden. Die Blattfeder 38 übt mit ihren Federabschnitten eine Kraft auf die Oberseite des Korotrondrahteinschubs 14a in Richtung des Fotoleiterbandes 20 aus. Der Korotrondrahteinschub 14a hat Reflektoren 46, wobei jeder Reflektor 46 den jeweiligen Korotrondraht 48 auf drei Seiten umschließt und die offene vierte Seite der Reflektoren 46 dem Fotoleiterband 20 zugewandt ist. Die Reflektoren 46 dienen zum Abschirmen des elektrischen Feldes. Der Korotrondrahteinschub 14a hat als tragendes Bauteil ein Aluminiumstrangprofil 47, welches jeweils seitlich eine U-Form hat, deren Schenkel 49 die Führungsschiene 36a, 36b mit Spiel s umgreifen. Durch das Spiel s kann sich der Korotrondrahteinschub 14a relativ zum Träger 42 in Richtung des Fotoleiterbandes 20 bewegen, so daß dem Korotrondrahteinschub 14a unabhängig von der exakten Position des Trägers 42 die Möglichkeit gegeben ist, auf Bandauflageelementen 54 aufzusitzen bzw. durch die Federkraft der Blattfeder 38 auf die Bandauflageelemente 54 gedrückt zu werden.

Auf der dem Fotoleiterband 20 gegenüberliegenden Seite der Reflektoren 46 sind Schlitze 50 zum Absaugen des Ozons vorhanden. Das Ozon wird in dem durch den Korotrondrahteinschub 14a und durch den Träger 42 gebildeten Kanal 52 abgesaugt und einer Ozonvernichtungseinheit zugeführt.

Das Fotoleiterband 20 wird von den Bandauflageelementen 54 geführt, die auf der der Korotrondrähten 48 abgewandten Seite des Fotoleiterbandes 20 angeordnet sind. Die Reflektoren 46 haben eine korrosionsbeständige Oberfläche, die vorzugsweise hartverchromt ist. Vorzugsweise ist das gesamte Aluminiumstrangprofil 47 hartverchromt.

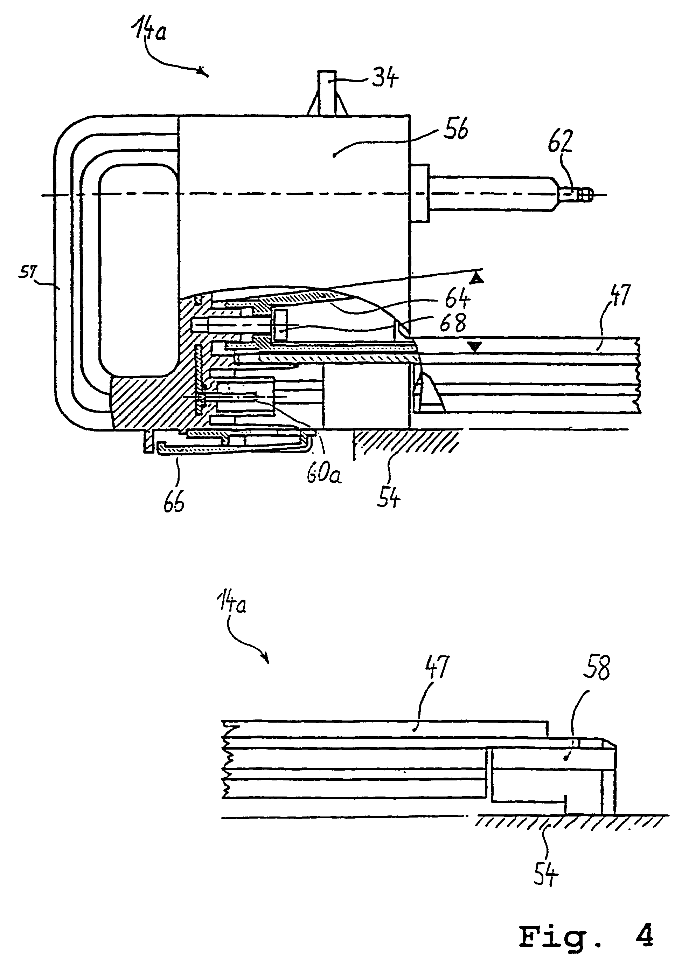

In Figur 4 ist der Korotrondrahteinschub 14a mit Bruchlinien als Teilschnitt dargestellt. Ein auf einer Seite vorgesehenes Verteilelement 56 hat einem Handgriff 57 und ist über das Aluminiumstrangprofil 47 mit einem Stützelement 58 verbunden. Das Verteilelement 56 und das Stützelement 58 liegen auf Abschnitten der Bandauflageelemente 54 auf, die beiderseits über die Breite des Fotoleiterbandes 20 überstehen. Diese Bandauflageelemente 54 bilden die Auflager für das Verteilelement 56 und das Stützelement 58. Die Längsachse des Korotrondrahtes 48 ist somit stets in einer parallelen Ebene zum Fotoleiterband 20 ausgerichtet.

Im Verteilelement 56 sind drei Kontaktstifte 60a, 60b, 60c angeordnet, die eine elektrisch leitende Verbindung zu den drei Korotrondrähten 48 des Korotrondrahteinschubs 14a herstellen. Im Verteilelement 56 sind die Kontaktstifte 60a, 60b, 60c elektrisch leitend mit einem Kontaktstift 62 verbunden, der eine elektrisch leitende Verbindung zu der Spannungsversorgungseinheit 24a herstellt. In dieser Figur 4 ist nur ein Kontaktstift 60a dargestellt. Die Verbindung erfolgt vorzugsweise durch Litzen oder durch eine Platte im Verteilelement 56. Die in dieser Figur 4 nicht dargestellte Buchse 40a zur Aufnahme des Kontaktstifts 62 ist auf der Spannungsversorgungseinheit 22a beweglich angeordnet, so daß eine relative Bewegung zwischen Korotrondrahteinschub 14a und dem Träger 42, mit dem die Spannungsversorgungseinheit 22a fest verbunden ist, möglich ist. Eine solche Anordnung wird auch als fliegender Stecker bezeichnet. Durch den Arretierungszapfen 34 ist der gesamte Korotrondrahteinschub 14a in einer Position zum Träger 42 mit Hilfe der Halteklammer 32a fixiert, wobei eine Bewegung des Korotrondrahteinschubs 14a in Richtung des Fotoleiterbandes 20 möglich ist. Das Aluminiumstrangprofil 47 ist mittels eines Keils 64 und eines Befestigungselements 68 mit dem Verteilelement 56 verbunden. Die Korotrondrähte 48 sind durch eine Arretierungseinrichtung 66 in dem Verteilelement 56 und somit in dem Korotrondrahteinschub 14a fixiert.

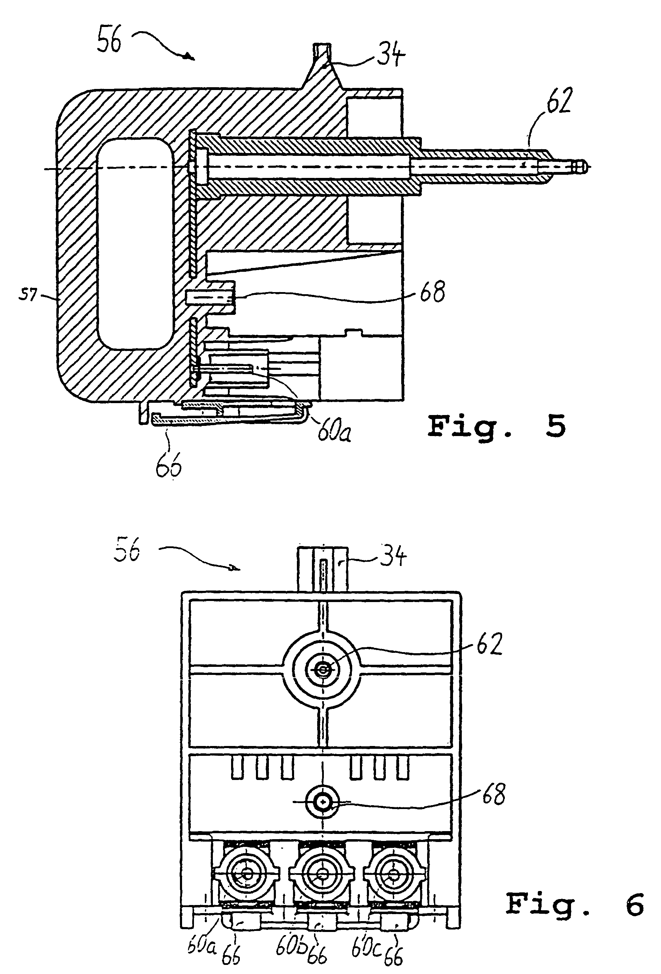

In Figur 5 ist das Verteilelement 56 im Vollschnitt dargestellt. Mit Hilfe des Befestigungselements 68 wird das Aluminiumstrangprofil 47 mit dem Verteilelement 56 verbunden.

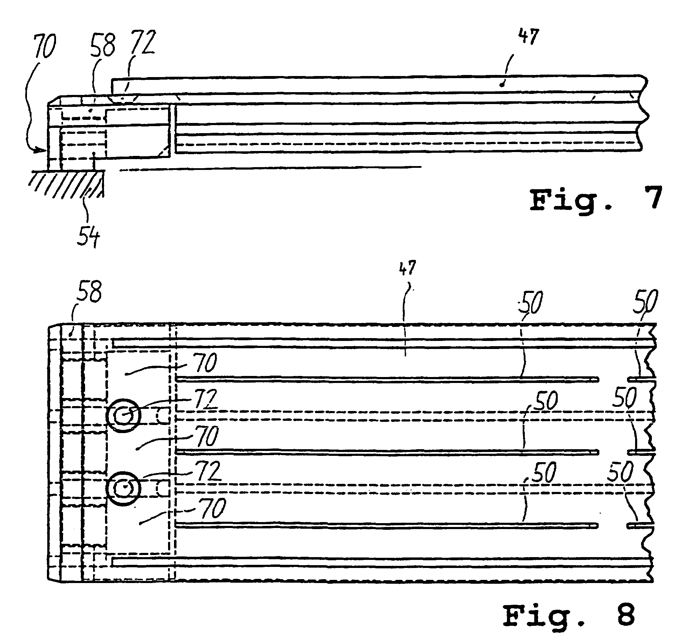

In Figur 6 ist das Verteilelement 56 des Korotrondrahteinschubs 14a aus Figur 4 und 5 in einer um 90° gedrehten Ansicht dargestellt. Die Aussparungen, die die drei Kontaktstifte 60a, 60b, 60c im Verteilelement 56 aufnehmen, dienen auch zur Aufnahme von Endstücken der drei Korotrondrähte 48.

In Figur 7 ist das Aluminiumstrangprofil 47 des Korotrondrahteinschubs 14a mit dem Bandauflageelement 54 als Auflager dargestellt. Das Stützelement 58 des Korotrondrahteinschubs 14a ist fest mit dem Aluminiumstrangprofil 47 verbunden. Es besteht aus einem isolierenden Material, z.B. aus einem isolierenden Kunststoff. In dem Stützelement 58 ist jeweils ein Ende der Korotrondrähte 48 gehalten. Das Aluminiumstrangprofil 47 ist mit dem Stützelement 58 durch Befestigungselemente 72 verbunden.

In Figur 8 ist das Aluminiumstrangprofil 47 aus Figur 7 in einer um 90° gedrehten Ansicht dargestellt. Durch die Schlitze 50 wird das Ozon abgesaugt. Öffnungen 70 in dem Stützelement 58 dienen zur Aufnahme der Endbuchsen der Korotrondrähte 48.

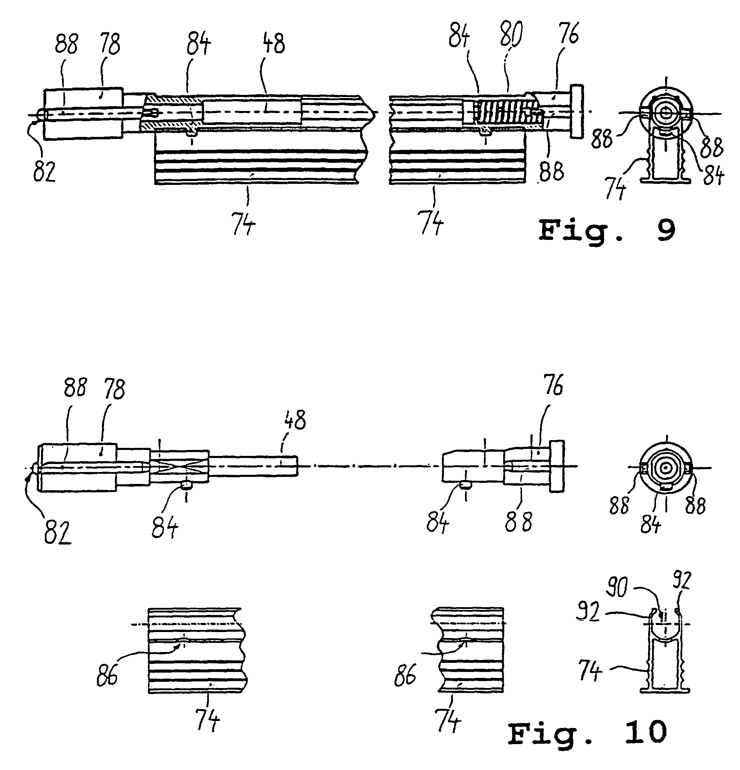

In Figur 9 ist der Korotrondraht 48 in einem Halteelement 74 sowie eine um 90° gedrehten Ansicht dieser Anordnung dargestellt. Der Korotrondraht 48 und das Halteelement 74 sind bei dieser Darstellung teilweise geschnitten. An beiden Enden des Korotrondrahtes 48 ist jeweils ein Endstück 76, 78 angebracht. Der Korotrondraht 48 ist glasummantelt und bildet mit den Endstücken 76, 78 eine Einheit. Das Endstück 78 hat eine Buchse 82, über die der in dieser Figur 9 nicht dargestellte Kontaktstift 60a des Verteilelements 56 eine elektrisch leitende Verbindung zu dem Korotrondraht 48 herstellt. Im Inneren des Endstücks 76 ist eine Feder 80, die den Korotrondraht 48 unter einer konstanten mechanischen Spannung hält. An den Endstücken 76, 78 ist je ein Zapfen 84 angebracht, der in jeweils eine Öffnung (in Figur 10 näher erläutert) des Halteelements 74 greift. Weiterhin sind an jedem Endstück 76, 78 zwei Führungselemente 88 angeordnet, die den Korotrondraht 48 im Verteilelement 56 und in den Öffnungen 70 des Stützelements 58 führen.

In Figur 10 ist der Korotrondraht 48 mit den Endstücken 76, 78 aus Figur 9 in einer ungeschnittenen Darstellung mit dem geschnitten dargestellten, vom Korotrondraht 48 getrennten Halteelement 74 sowie eine um 90° gedrehten Ansicht dieser Anordnung dargestellt. Das Halteelement 74 besteht aus einem Kunststoffziehprofil mit einer Öffnung 90 zum Aufnehmen des Korotrondrahtes 48. Die Öffnung 90 ist von zwei gewölbten Schenkeln 92 gebildet, die den Korotrondraht 48 beim Aufnehmen im Halteelement 74 teilweise umschließen. Die gewölbten Schenkel 92 bilden federnde Elemente, die den Korotrondraht 48 in dem Halteelement 74 fixieren.

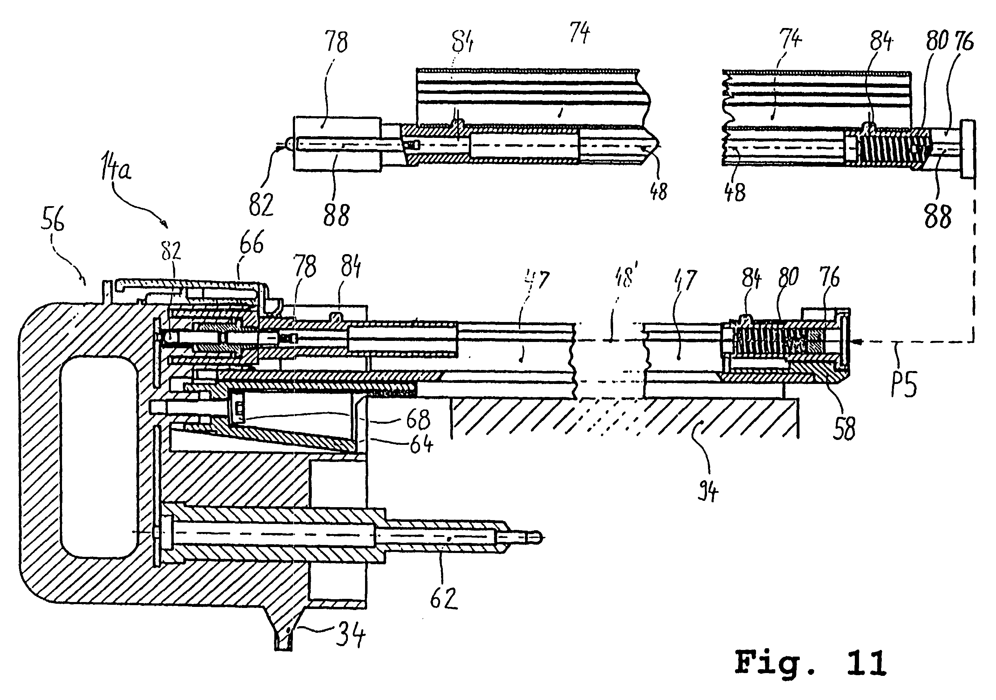

In Figur 11 ist der Korotrondrahteinschub 14a und der Korotrondraht 48 in dem Halteelement 74 dargestellt. Der Korotrondrahteinschub 14a ist aus dem Drucker oder Kopierer ausgebaut und befindet sich zur Montage der Korotrondrähte 48 auf einem Montagetisch 94, so daß die Korotrondrähte 48 für eine Bedienperson sichtbar und gut zugänglich sind. Durch den Pfeil P5 ist der Einsetzvorgang des Korotrondrahtes 48 in den Korotrondrahteinschub 14a angedeutet. Zum Einsetzen in den Korotrondrahteinschub 14a befindet sich der einzusetzende Korotrondraht 48 mit den Endstücken 76, 78 in der Haltevorrichtung 74, wobei die Zapfen 84 die Endstücke 76, 78 des Korotrondrahtes 48 in dem Halteelement 74 fixieren. Mit dem Halteelement 74 wird der fixierte Korotrondraht 48 entlang der Linie des Pfeils P5 in den Korotrondrahteinschub 14a eingeführt, bis der Korotrondraht 48' mit seinen Endstücken 76', 78' durch das Arretierungselement 66 in dem Korotrondrahteinschub 14a fixiert ist. Nach dem Fixieren des Korotrondrahtes 48' in dem Korotrondrahteinschub 14a wird das Halteelement 74 nach oben aus dem Korotrondrahteinschub 14a entfernt. Der Korotrondraht 48' ist betriebsfertig eingesetzt. Durch die Form des Aluminiumstrangprofils 47 und der dadurch gegebenen freien Zugänglichkeit läßt sich das Aluminiumstrangprofil 47 mit den Reflektoren 46 beim Austausch der Korotrondrähte 48 leicht reinigen.

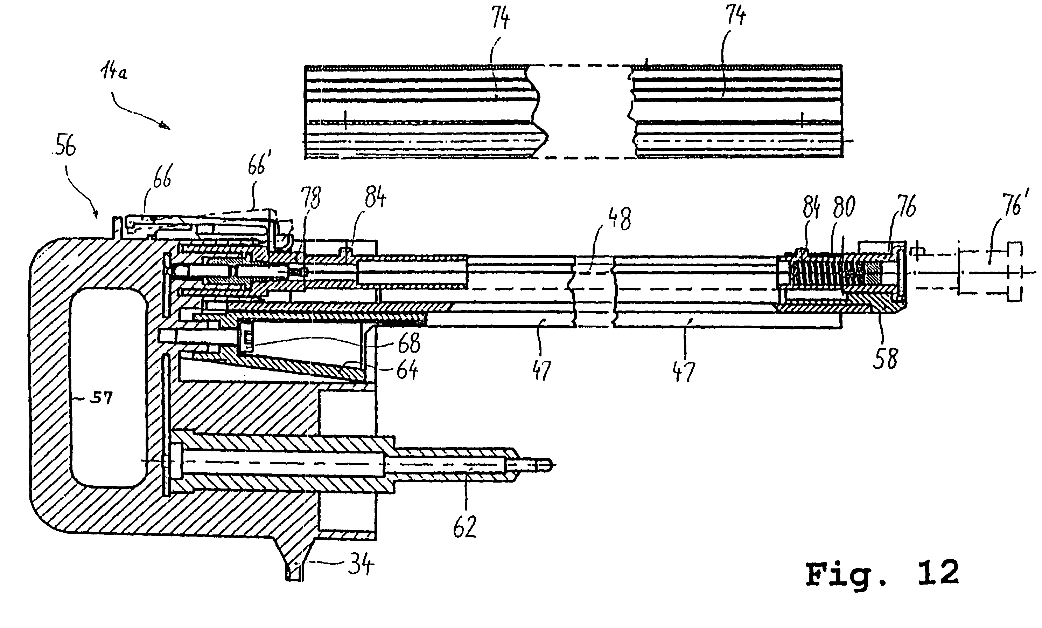

In Figur 12 ist der Korotrondrahteinschub 14a mit dem eingesetzten Korotrondraht 48 sowie das Halteelement 74 aus Figur 11 dargestellt. In dieser Figur ist gezeigt, wie der Korotrondraht 48 in den Korotrondrahteinschub 14a eingesetzt bzw. ausgebaut wird. Dazu wird der Korotrondraht 48 in dem Halteelement 74 mit einem Versatz zum Verteilelement 56 parallel zum Aluminiumstrangprofil 47 in die Öffnung 70 des Stützelements 58 entlang des in Figur 11 gezeigten Pfeils P5 eingeführt. Das Endstück 76 des Korotrondrahtes 48 nimmt dabei die Position 76' ein. Anschließend wird das Halteelement 74 zusammen mit dem Korotrondraht 48 und dessen Endstücken 76, 78 in Richtung Verteilelement 56 geschoben, wobei der Kontaktstift 60a (nicht dargestellt) in die Buchse 82 des Endstücks 78 eingeführt wird. Das Arretierungselement 66 wird beim Einführen des Korotrondrahtes 48 in die Korotrondrahteinheit 14a durch das Endstück 78 in die Position 66' ausgelenkt und arretiert den Korotrondraht 48 anschließend in der Endlage Vorzugsweise wird das Arretierungselement 66 durch ein Federelement in seiner Endlage gehalten. Anschließend wird das Halteelement 74 vom Korotrondraht 48 entfernt. Zum Ausbauen des Korotrondrahtes 48 wird das Halteelement 74 auf den Korotrondraht 48 geschoben, so daß die gewölbten Schenkel 92 des Halteelements 74 den Korotrondraht 48 teilweise umschließen und die Zapfen 84 der Endstücke 76, 78 den Korotrondraht 48 im Halteelement 74 fixieren. Anschließend wird das Arretierungselement 66 in die Position 66' gebracht, das Halteelement 74 wird mit dem Korotrondraht 48 parallel zum Aluminiumstrangprofil 47 in Richtung Stützelement 58 bis in die Position 76' des Endstücks 76 geschoben und anschließend aus der Korotrondrahteinheit 14a entfernt.

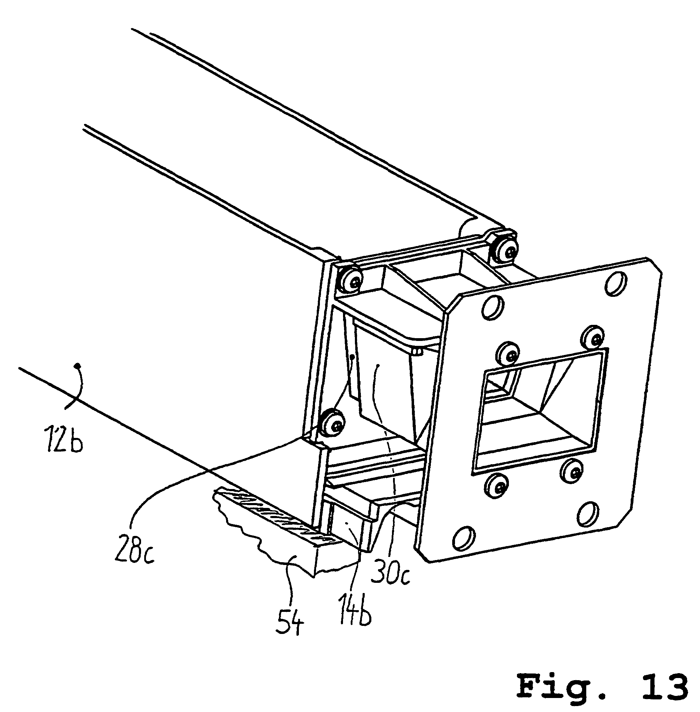

In Figur 13 ist eine perspektivische Teilansicht der Korotronanordnung in Betriebslage dargestellt. Der in der Korotronanordnung 12b angeordnete Korotrondrahteinschub 14b sitzt auf dem Auflageelement 54 auf, das den Korotrondrahteinschub 14b gegenüber dem in dieser Figur 13 nicht dargestellten Fotoleiterband 20 in einer parallelen Ebene ausrichtet. Die Korotronanordnung 12b mit dem Korotrondrahteinschub 14b befindet sich in Betriebslage, d.h. der Korotrondrahteinschub 14b ist durch die Auflageelemente 54 in einem korrekten Abstand parallel zum Fotoleiterband 20 ausgerichtet.

Weiterhin ist ein Verbindungselement 28c mit der Korotronanordnung 12b und ein zweites Verbindungselement 30c mit dem Gehäuse des Druckers und/oder Kopierers fest verbunden. Die Verbindungselemente 28c und 30c ersetzen in dieser Ausführungsvariante die in Figur 1 dargestellten Verbindungselemente 28a, 28b, 30a, 30b, wobei die Verbindungselemente 28a, 28b durch je ein Verbindungselement 28c und die Verbindungselemente 30a, 30b durch je ein Verbindungselement 30c ersetzt sind. Die Verbindungselemente 28c und 30c haben einen symmetrischen trapezförmigen Querschnitt, wobei die nach unten zeigenden Außenflächen des Verbindungselements 28c mit den nach oben zeigenden Innenflächen des Verbindungselements 30c Dichtflächen ausbilden, die durch überlappendes Berühren eine dichte Anordnung bilden. Das in der Korotronanordnung 12b entstehende Ozon-Luftgemisch wird über die durch die von den Verbindungselementen 28c, 30c geschaffene Verbindung abgesaugt und einer Ozonvernichtungseinheit zugeführt. Eine Gefährdung von Personen durch austretendes Ozon ist somit zuverlässig verhindert.

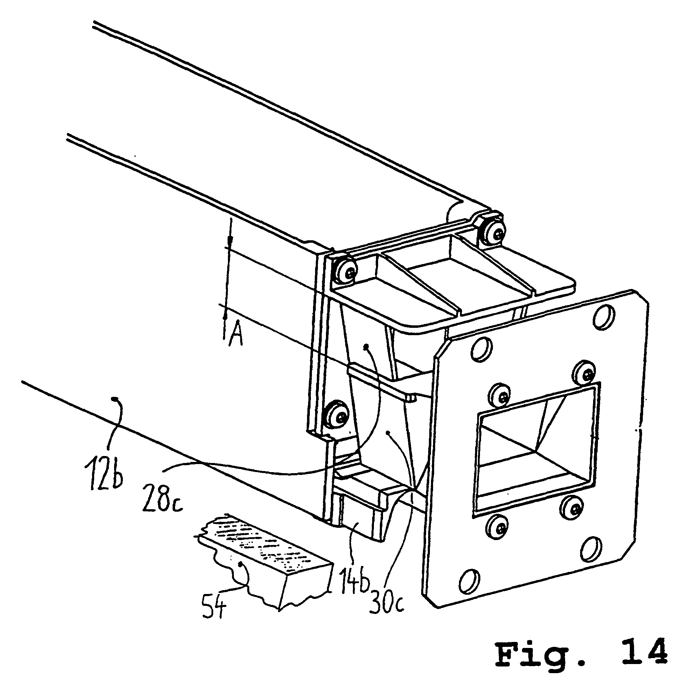

In Figur 14 ist eine perspektivische Teilansicht der Korotronanordnung aus Figur 13 in Wartungsposition dargestellt. Die Korotrondrahteinheit 12b ist in der Wartungsposition zusammen mit dem Korotrondrahteinschub 14b um den Abstand A von den Auflageelementen 54 abgehoben. Dazu werden alle mit den Schwenkträgerplatinen 18a, 18b verbundenen Elemente und Anordnungen (siehe Figur 1) über ein nicht dargestelltes Hebelsystem vom Fotoleiterband 20 wegbewegt. Das Hebelsystem ist nur bei geöffnetem Drucker- oder Kopierergehäuse zugänglich. Das Abheben dient vor allem dazu, bei Wartungsarbeiten den Zugang bzw. die Montagefreiheit für die an den Schwenkträgerplatinen 18a, 18b angeordneten Elemente und für das Fotoleiterband 20 zu gewährleisten. Durch das Abheben berühren sich die Dichtflächen der Verbindungselemente 28c, 30c nicht mehr und können gegeneinander frei bewegt werden. Beim Absenken der Korotronanordnung 12b berühren sich die Dichtflächen der Verbindungselemente 28c und 30c wieder, so daß der Kanal 52 der Korotronanordnung 12b zum Absaugen des Ozons durch die Verbindungselemente 28c, 30c wieder dicht mit der Ozonvernichtungseinheit verbunden ist.

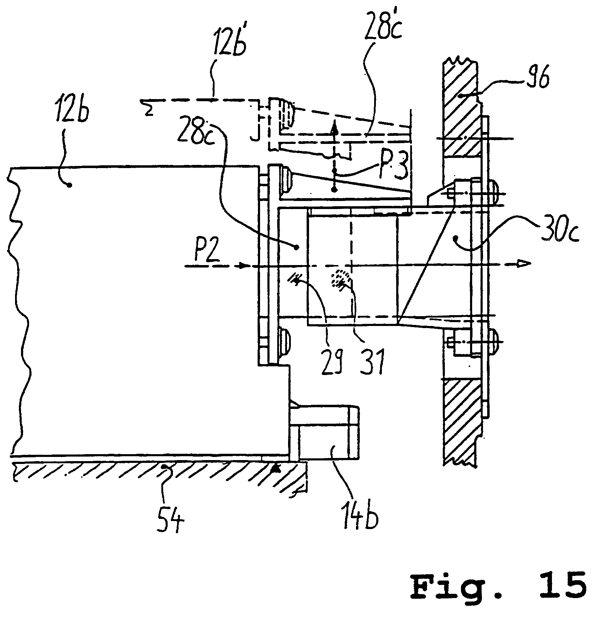

In Figur 15 ist eine Teilansicht der Korotronanordnung in Betriebslage dargestellt. Das Verbindungselement 30c ist dabei mit dem Drucker- oder Kopierergehäuse 96 fest verbunden. Die Außenseite des Verbindungselements 28c bildet eine Dichtfläche 29 und die Innenseite des Verbindungselementes 30c bildet eine Dichtfläche 31. Wenn sich die Dichtflächen 29, 31 überlappend berühren, ermöglichen sie eine dichte Verbindung zwisehen der Korotronanordnung 12b und der Ozonvernichtungseinheit. Die Ozonvernichtungseinheit saugt das in der Korotronanordnung 12b entstehende Ozon- Luftgemisch in Pfeilrichtung des Pfeils P2 ab. Wenn die Korotronanordnung 12b, wie in der Figur 14 beschrieben, in die Wartungsposition angehoben wird, wobei die Korotronanordnung 12b mit dem Verbindungselement 28c in Pfeilrichtung des Pfeils P2 bewegt wird, nehmen die Korotronanordnung und das Verbindungselement die Positionen 12b' und 28c' ein.

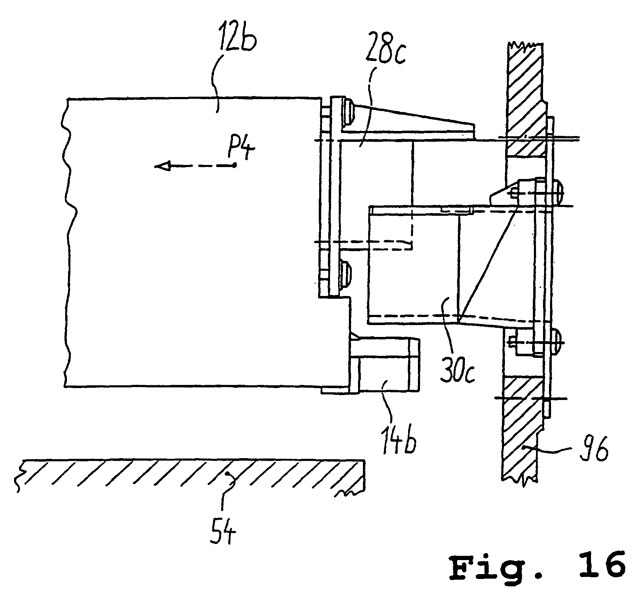

In Figur 16 ist eine Teilansicht der Korotronanordnung in Wartungsposition dargestellt. Der Pfeil P4 deutet eine zusätzliche Bewegungsmöglichkeit der Korotronanordnung 12b an, die in der Wartungsposition gegeben ist.

### Bezugszeichenliste

- 10: Schwenkträger
- 12a: Korotronanordnung
- 12b: Korotronanordnung
- 14a: Korotrondrahteinschub
- 14b: Korotrondrahteinschub
- 16a: Einschubplatz für Korotrondrahteinschub
- 16b: Einschubplatz für Korotrondrahteinschub
- 18a: Schwenkträgerplatine
- 18b: Schwenktfägerplatine
- 20: Fotoleiterband
- 22a: Spannungsversorgungseinheit
- 22b: Spannungsversorgungseinheit
- 24a: Netzteil zum Erzeugen der Korotronspannung
- 24b: Netzteil zum Erzeugen der Korotronspannung
- 26a: Netzteil zum Erzeugen der Schirmspannung
- 26b: Netzteil zum Erzeugen der Schirmspannung
- 28a: Verbindungselement Ozonabsaugung
- 28b: Verbindungselement Ozonabsaugung
- 28c: Verbindungselement Ozonabsaugung
- 29: Dichtfläche
- 30a: Verbindungselement Ozonabsaugung
- 30b: Verbindungselement Ozonabsaugung
- 30c: Verbindungselement Ozonabsaugung
- 31: Dichtfläche
- 32a: Halteklammer für Korotrondrahteinschub
- 32b: Halteklammer für Korotrondrahteinschub
- 34: Arretierungszapfen
- 36a: Führungsschiene für Korotrondrahteinschub
- 36b: Führungsschiene für Korotrondrahteinschub
- 38: Blattfeder
- 40a: Buchse Spannungsversorgungseinheit
- 40b: Buchse Spannungsversorgungseinheit
- 42: Träger mit H-förmigen Querschnitt
- 44: Schrauben
- 46: Reflektor
- 47: Aluminiumstrangprofil
- 48: Korotrondraht
- 49: Schenkel
- 50: Schlitze zur Ozonabsaugung
- 52: Kanal zur Ozonabsaugung
- 54: Bandauflageelement
- 56: Verteilelement
- 58: Stützelement des Korotrondrahteinschubs
- 60a: Kontaktstift für Korotrondraht
- 60b: Kontaktstift für Korotrondraht
- 60c: Kontaktstift für Korotrondraht
- 62: Kontaktstift Spannungsversorgung
- 64: Keil zum Befestigen des Reflektors
- 66: Arretierungselement zur Drahtverriegelung
- 68: Befestigungselement
- 70: Öffnungen des Stützelements
- 72: Befestigungselement
- 74: Halteelement
- 76: Endstück Korotrondraht
- 78: Endstück Korotrondraht
- 80: Feder
- 82: Buchse
- 84: Zapfen
- 86: Öffnung für Zapfen
- 88: Führungselemente
- 90: Öffnung für Korotrondraht
- 92: gewölbte Schenkel des Halteelements
- 94: Auflage Montagetisch
- 96: Gestell
- P1: Pfeil zur Laufrichtungsangabe des Fotoleiterbandes
- P2: Absaugrichtung des Ozon-Luftgemischs
- P3: Bewegungsrichtung in Wartungsposition
- P4: Bewegungsmöglichkeit bei Wartungsposition
- P5: Pfeil zum Einführen des Korotrondrahtes
- A: Abstand Wartungsposition zur Betriebslage
- s: Spiel

## Patentansprüche

1. Korotron für elektrographische Prozesse, insbesondere in einem Drucker oder Kopierer,
mit mindestens einem von einem Halteelement (14a, 14b) gehaltenen Korotrondraht (48), an dem ein gegenüberstehendes Trägermaterial (20) für ein latentes Bild vorbeigeführt ist,
mit einem Führungselement (54), durch das das Trägermaterial (20) geführt ist,
wobei das Trägermaterial (20) und der Korotrondraht (48) in im wesentlichen parallel zueinander angeordneten Ebenen liegen, und wobei
das Halteelement (14a, 14b) an mindestens zwei Auflagestellen auf mit dem Führungselement (54) fest verbundenen Auflagern (54) aufliegt und mit einer Federkraft auf die Auflager (54) gedrückt ist.

2. Korotron nach Anspruch 1, **dadurch gekennzeichnet, daß** das Halteelement (14a, 14b) in Führungselementen (36a, 36b) geführt ist,
daß die Führungselemente (36a, 36b) und das Halteelement (14a, 14b) ein Spiel (s) in Richtung Trägermaterial (20) haben,
und daß das Halteelement (14a, 14b) auf Auflagestellen auf Auflagern (54) aufliegt, die beiderseits des Trägermaterials (20) angeordnet sind.

3. Korotron nach Anspruch 1 oder 2, **dadurch gekennzeichnet, daß** das Halteelement (14a, 14b) mit einer Feder (38) auf die Auflager (54) gedrückt wird,
und daß das Halteelement (14a, 14b) in einer parallelen Ebene zum Trägermaterial (20) durch die Feder (38) fixiert ist.

4. Korotron nach einem der vorhergehenden Ansprüche, **dadurch gekennzeichnet, daß** das Halteelement (14a, 14b) durch Führungselemente (36a, 36b) in einem Träger (42) geführt ist,
und daß der Träger (42) in einer schwenkbaren Anordnung (10) angeordnet ist.

## Claims

1. Corotron for electrographic processes, in particular in a printer or copier, comprising
at least one corotron wire (48) which is held by a fixing element (14a, 14b) and past which an opposite support material (20) for a latent image is guided,
a guiding element (54) by which the support material (20) is guided,
the support material (20) and the corotron wire (48) lying in planes arranged substantially parallel to one another, and
the fixing element (14a, 14b) resting on at least two support positions on supports (54) which are securely fixed to the guiding element (54) and being pressed onto the supports (54) by a spring force.

2. Corotron according to claim 1, **characterized in that** the fixing element (14a, 14b) is guided in guiding elements (36a, 36b),
**in that** the guiding elements (36a, 36b) and the fixing element (14a, 14b) have a play (s) in the direction of the support material (20),
and **in that** the fixing element (14a, 14b) rests on support positions on supports (54) which are arranged on both sides of the support material (20).

3. Corotron according to claim 1 or 2, **characterized in that** the fixing element (14a, 14b) is pressed onto the supports (54) by a spring (38),
and **in that** the fixing element (14a, 14b) is fixed in a plane parallel to the support material (20) by the spring (38).

4. Corotron according to one of the preceding claims, **characterized in that** the fixing element (14a, 14b) is guided by guiding elements (36a, 36b) in a carrier (42),
and **in that** the carrier (42) is arranged in a pivoting assembly (10).

## Revendications

1. Corotron pour processus électrographique, en particulier dans un appareil d'impression ou un copieur, comprenant :
au moins un fil de corotron (48) qui est maintenu par un élément de retenue (14a, 14b) et devant lequel passe un matériau de support (20) situé en face et destiné à une image latente,
un élément de guidage (54) permettant de guider le matériau de support (20),
le matériau de support (20) et le fil de corotron (48) étant disposés dans des plans sensiblement parallèles entre eux, et
l'élément de retenue (14a, 14b) reposant en au moins deux emplacements d'appui sur des appuis (54) reliés fixes à l'élément de guidage (54), et étant pressé avec une force élastique sur les appuis (54).

2. Corotron selon la revendication 1, **caractérisé en ce que** :
l'élément de retenue (14a, 14b) est guidé dans des éléments de guidage (36a, 36b),
les éléments de guidage (36a, 36b) et l'élément de retenue (14a, 14b) présentent un jeu (s) dans direction du matériau de support (20), et
l'élément de retenue (14a, 14b) porte en des emplacements d'appui sur des appuis (54) qui sont disposés des deux côtés du matériau de support (20).

3. Corotron selon la revendication 1 ou 2, **caractérisé en ce que** :
l'élément de retenue (14a, 14b) est pressé avec un ressort (38) sur les appuis (54), et
l'élément de retenue (14a, 14b) est fixé par le ressort (38) dans un plan parallèle au matériau de support (20).

4. Corotron selon l'une des revendications précédentes, **caractérisé en ce que** :
l'élément de retenue (14a, 14b) est guidé par des éléments de guidage (36a, 36b) dans un support (42), et
le support (42) est disposé dans un agencement pivotant (10).
